# FASCICULE DE BREVET EUROPEEN

(11) **EP 1 018 917 B1**
(45) Date de publication et mention de la délivrance du brevet: **18.02.2004**
(21) Numéro de dépôt: 98947594.2
(22) Date de dépôt: 02.10.1998
(51) Int. Cl.: A47J 42/56

(54) **DISPOSITIF DE SECURITE POUR APPAREIL ELECTROMENAGER DE PREPARATION CULINAIRE, DU GENRE ROBOT MENAGER, ET APPAREIL COMPORTANT UN TEL DISPOSITIF**
SICHERHEITSVORRICHTUNG FÜR EIN ELEKTRISCHES HAUSHALTSGERÄT ZUM ANWENDEN IN DER KÜCHE, UND GERÄT MIT EINER SOLCHEN VORRICHTUNG
SAFETY DEVICE FOR HOUSEHOLD ELECTRIC COOKING APPLIANCE, SUCH AS A FOOD PROCESSOR, AND APPLIANCE COMPRISING SAID DEVICE

(30) Priorité: 03.10.1997 FR 9712567
(43) Date de publication de la demande: 19.07.2000
(73) Titulaire: SEB S.A., 69130 Ecully (FR)
(72) Inventeur: BINEAU, Pierre, F-64800 Asson (FR); CHARLES, Patrick, F-65290 Louey (FR); SALLADARRE, Claude, F-64420 Espoey (FR)
(74) Mandataire: Kiehl, Hubert
(86) Numéro de dépôt international: PCT/FR1998/002114
(87) Numéro de publication internationale: WO 1999/017646

(56) Documents cités:
- EP-A- 0 076 712
- EP-A- 0 120 496
- EP-A- 0 253 719
- EP-A- 0 529 287
- DE-A- 3 540 370

## Description

### DOMAINE TECHNIQUE

La présente invention concerne un appareil électroménager de préparation culinaire, du genre robot ménager, comportant un corps comprenant un bloc moteur, un récipient de travail prévu pour recevoir un organe rotatif de travail entraîné par le bloc moteur, ainsi qu'un couvercle susceptible d'être disposé sur le récipient de travail selon un mouvement simple pour procéder au verrouillage de l'appareil.

Par appareil électroménager de préparation culinaire, du genre robot ménager, on entend un appareil prévu pour réaliser des préparations hachées, des mélanges, ou encore des préparations râpées ou émincées.

### TECHNIQUE ANTERIEURE

Le document FR 2 447 703 décrit un appareil électroménager de préparation culinaire, comprenant un couvercle susceptible d'être verrouillé sur un récipient de travail au moyen d'un système de fixation à baïonnette. Le couvercle comprend une patte dirigée vers le bas et prolongée par une languette dirigée vers l'extérieur. Lorsque le couvercle est verrouillé sur le récipient de travail, cette languette se trouve à une certaine hauteur du fond dudit récipient. Le corps de l'appareil comporte un boîtier latéral faisant saillie par rapport à un socle prévu pour recevoir le récipient. Le boîtier comporte une fente parallèle à la surface supérieure du socle, s'étendant depuis l'un des cotés du boîtier jusque sur la face disposée en regard du socle. La languette engagée dans la fente du boîtier par rotation du couvercle par rapport au récipient actionne un dispositif de sécurité autorisant le fonctionnement de l'appareil lorsque ladite languette est correctement positionnée. Cette disposition permet d'éviter que l'utilisateur ôte le couvercle et accède aux outils de travail alors que ceux-ci sont en fonctionnement dans le récipient de travail.

Cette réalisation présente l'inconvénient de nécessiter un positionnement précis du couvercle par rapport au récipient de travail pour verrouiller le couvercle sur le récipient de travail. Le dispositif de sécurité exige que le couvercle soit amené dans une position déterminée par rapport au boîtier pour autoriser le fonctionnement de l'appareil. Lorsque le couvercle comprend une cheminée prévue pour introduire des ingrédients dans le récipient de travail, la position de celle-ci est déterminée par la position du couvercle permettant le fonctionnement de l'appareil. L'utilisateur ne peut pas choisir la position du couvercle.

Le document EP 0 549 818 décrit un appareil électroménager de préparation culinaire comprenant un récipient de travail verrouillé sur un corps au moyen d'un système de fixation à baïonnette, un couvercle verrouillé sur le récipient de travail au moyen d'un système de fixation à baïonnette, le couvercle comportant une languette s'engageant dans une fente d'un boîtier formant une partie proéminente du corps pour actionner un dispositif de sécurité autorisant le fonctionnement de l'appareil.

Une telle réalisation permet le maintien du récipient de travail sur le corps lors du fonctionnement de l'appareil et évite de solliciter mécaniquement la languette actionnant le dispositif de sécurité, mais présente l'inconvénient de demander à l'utilisateur deux mouvements de verrouillage associant chacun un positionnement précis du récipient par rapport au corps, ou du couvercle par rapport au récipient, suivi d'une rotation du récipient par rapport au corps, ou du couvercle par rapport au récipient.

Le document FR 2 340 706 décrit un appareil électroménager de préparation culinaire comportant un socle dont la partie supérieure constitue un siège de réception d'un accessoire amovible, tel qu'un coupe légume, ledit accessoire comportant un boîtier formant récipient de travail et un couvercle coiffant le boîtier. Le couvercle est verrouillé au moyen de deux verrous diamétralement opposés, du type dit à genouillère, comportant chacun un crochet dont le bec vient en prise avec une oreille du socle et qui est articulé au couvercle par l'intermédiaire d'un étrier basculant interposé entre un bossage de ce couvercle et l'extrémité de ce crochet opposée à son bec. Le moteur est commandé par un interrupteur dont la touche de manoeuvre est située sur la partie supérieure du socle et est actionnée au moyen d'un poussoir monté mobile sur le crochet de verrouillage, par l'intermédiaire d'une transmission montée dans le boîtier de l'accessoire.

Cette construction présente l'inconvénient de proposer un appareil comprenant un récipient de travail comportant des moyens de transmission servant à actionner le moteur de l'appareil. Le nettoyage dudit récipient n'est pas facilité par cette disposition. De plus, un positionnement précis du couvercle, du récipient de travail et du socle de l'appareil est nécessaire pour procéder au verrouillage du couvercle sur le socle.

L'utilisation de tels appareils est peu aisée, et à la longue fastidieuse. De plus l'utilisateur ne peut pas choisir la position du couvercle avec un appareil équipé d'un dispositif de sécurité.

Le document FR 2 370 456 décrit un mélangeur électroménager comprenant un récipient de travail disposé sur un socle et fermé par un couvercle, le verrouillage du couvercle étant assuré par un levier d'actionnement pivotant autour d'un axe horizontal et s'appliquant par un palier mobile contre un levier de verrouillage, lequel pivote autour d'un palier fixe et prend appui contre le couvercle. Le palier fixe peut se mouvoir librement d'une distance déterminée dans le sens axial. Partant dudit palier fixe une tige de commande guide un interrupteur jusqu'à un bouton d'actionnement du circuit commandant le moteur de l'appareil.

Une telle réalisation offre l'avantage de proposer un appareil équipé d'un dispositif de sécurité autorisant le fonctionnement dudit appareil seulement lorsque le couvercle est correctement verrouillé sur le récipient de travail, et dans lequel le couvercle peut être disposé sans orientation précise sur le récipient de travail, le récipient de travail pouvant être également disposé sans orientation précise sur le socle. Cette réalisation présente toutefois l'inconvénient de commander le verrouillage ainsi que la sécurité par la rotation d'un levier autour d'un axe horizontal, ce qui présente un risque de déséquilibrer l'appareil lors des opérations de verrouillage ou de déverrouillage, si l'appareil n'est pas suffisamment maintenu lors de la manoeuvre du levier.

Il est connu du document DE 3 540 370 un dispositif de sécurité pour appareil électroménager de préparation culinaire, du genre robot ménager comportant un corps formant un socle prévu pour recevoir un récipient de travail dans lequel est susceptible d'être disposé un organe de travail rotatif entraîné par un moteur disposé dans le corps. Un couvercle est prévu pour fermer le récipient de travail. Les parties en regard du couvercle et du récipient de travail présentent un axe de symétrie. Le couvercle peut être mis en place sur le récipient de travail selon un mouvement axial. Le dispositif de sécurité comprend dans le couvercle un élément de détection prévu pour coopérer avec des moyens de détection de la présence du couvercle sur le récipient disposé sur le socle, lesdits moyens de détection étant disposés dans le corps.

La mise en place et le retrait du couvercle peuvent s'effectuer en utilisant uniquement un mouvement axial. Toutefois, du fait de la présence de l'élément de détection, le dispositif de sécurité précité nécessite un positionnement du couvercle sur le récipient de travail selon une orientation particulière.

Il est connu du document EP 0 076 712 un appareil électroménager de préparation culinaire, du genre robot ménager, comportant un corps formant un socle prévu pour recevoir un récipient de travail dans lequel est susceptible d'être disposé un organe de travail rotatif entraîné par un moteur disposé dans le corps. Un couvercle est prévu pour fermer le récipient de travail. Des moyens de verrouillage du couvercle ferment le récipient de travail disposé sur le socle. Les parties en regard du couvercle et du récipient de travail présentent un axe de symétrie. Le couvercle peut être mis en place sur le récipient de travail selon un mouvement axial.

Toutefois le dispositif de sécurité de l'appareil est actionné par la rotation de la couronne verrouillant le couvercle sur le récipient de travail. Plusieurs mouvements sont donc nécessaires pour fermer le couvercle et permettre la mise en marche de l'appareil.

### EXPOSE DE L'INVENTION

L'objet de l'invention vise en conséquence à porter remède aux différents inconvénients énumérés précédemment et à fournir un dispositif de sécurité pour un appareil électroménager de préparation culinaire dont la mise en oeuvre est particulièrement sûre et facile.

Un autre objet de la présente invention vise à proposer un dispositif de sécurité pour un appareil électroménager de préparation culinaire qui offre une certaine liberté de positionnement du récipient de travail par rapport au socle de l'appareil.

Un autre objet de la présente invention vise à proposer un dispositif de sécurité pour un appareil électroménager de préparation culinaire qui offre une certaine liberté de positionnement du couvercle par rapport au récipient de travail.

Un autre objet de la présente invention vise à proposer un dispositif de sécurité pour un appareil électroménager de préparation culinaire qui soit de construction peu onéreuse et fiable dans le temps.

Un autre objet de la présente invention vise à proposer un appareil électroménager de préparation culinaire muni d'un tel dispositif de sécurité.

Les objets assignés à l'invention sont atteints à l'aide d'un dispositif de sécurité selon les caractéristiques de la revendication 1.

Cette disposition permet d'obtenir une certaine liberté de positionnement du couvercle sur le récipient de travail. L'utilisateur peut ainsi par exemple choisir entre différentes positions pour une cheminée d'introduction d'ingrédients disposée sur le couvercle.

Avantageusement le couvercle comporte une bague de détection prévue pour coopérer avec au moins un détecteur disposé dans le corps.

L'utilisateur dispose ainsi d'une liberté de positionnement plus étendue du couvercle sur le récipient.

Selon un premier mode de réalisation, le dispositif comporte des moyens magnétiques, disposés sur la périphérie du couvercle, lesdits moyens étant susceptibles de coopérer avec un détecteur magnétique, disposé dans le corps et relié à une électronique de détection, lorsque le couvercle est mis en place sur le récipient disposé sur le socle.

Cette disposition est intéressante notamment lorsque les moyens de verrouillage de l'appareil, par exemple des mâchoires, sont montés sur le couvercle et ne comportent pas de liaison mécanique ou électrique avec le corps de l'appareil.

Selon un deuxième mode de réalisation, le dispositif comporte un moyen de commande monté dans le corps et susceptible d'être actionné par le couvercle mis en place sur le récipient disposé sur le socle, ainsi qu'un moyen de protection prévu pour s'interposer entre le corps et le récipient lors de l'actionnement du moyen de commande.

Cette disposition est intéressante notamment lorsque les moyens de verrouillage de l'appareil sont montés sur le corps de l'appareil. Cette disposition évite que l'utilisateur actionne les moyens de sécurité autrement que par l'intermédiaire du couvercle correctement mis en place sur le récipient disposé sur le socle de l'appareil.

Selon un troisième mode de réalisation, le dispositif comporte au moins deux capteurs de commande disposés dans le corps, et susceptibles d'actionner au moins un microrupteur, lesdits capteurs comprenant chacun au moins une tête susceptible d'occuper une position sortie dans laquelle le microrupteur n'autorise pas le fonctionnement de l'appareil, lesdites têtes étant susceptibles d'être déplacée par le couvercle mis en place sur le récipient disposé sur le socle vers une position rentrée dans laquelle le microrupteur autorise le fonctionnement de l'appareil.

Cette disposition est intéressante notamment lorsque les moyens de verrouillage de l'appareil sont montés sur le corps de l'appareil. Cette disposition permet grâce à l'utilisation de deux moyens de sécurité éloignés d'éviter que l'utilisateur actionne les moyens de sécurité d'une seule main.

Les objets de l'invention sont également atteints à l'aide d'un appareil électroménager de préparation culinaire, du genre robot ménager, selon les caractéristiques de la revendication 13.

### DESCRIPTION SOMMAIRE DES DESSINS

D'autres avantages et particularités de l'invention ressortiront mieux à l'aide de la description faite ci-après, en référence aux dessins annexés qui montrent à titre d'exemples non limitatifs, des formes de réalisation de l'objet de l'invention dans lesquels :
- La figure 1 montre selon une vue partielle de face en coupe un exemple de réalisation d'un premier mode de réalisation d'un appareil électroménager de préparation culinaire selon l'invention, dans lequel le couvercle est disposé sur le récipient de travail,
- La figure 2a montre selon une vue latérale partielle en coupe un premier exemple de réalisation d'un deuxième mode de réalisation du dispositif de sécurité selon l'invention, dans lequel le couvercle est soulevé du récipient de travail,
- La figure 2b montre selon une vue latérale partielle en coupe un premier exemple de réalisation d'un deuxième mode de réalisation du dispositif de sécurité selon l'invention, dans lequel le couvercle est mis en place sur le récipient de travail,
- La figure 2c montre selon une vue latérale partielle en coupe un premier exemple de réalisation d'un deuxième mode de réalisation du dispositif de sécurité selon l'invention, dans lequel le couvercle est disposé sur le récipient de travail,
- La figure 3a montre selon une vue latérale partielle en coupe un deuxième exemple de réalisation d'un deuxième mode de réalisation du dispositif de sécurité selon l'invention, dans lequel le couvercle est soulevé du récipient de travail,
- La figure 3b montre selon une vue latérale partielle en coupe un deuxième exemple de réalisation d'un deuxième mode de réalisation du dispositif de sécurité selon l'invention, dans lequel le couvercle est mis en place sur le récipient de travail,
- La figure 4a montre selon une vue latérale partielle en coupe un troisième exemple de réalisation d'un deuxième mode de réalisation du dispositif de sécurité selon l'invention, dans lequel le couvercle est soulevé du récipient de travail,
- La figure 4b montre selon une vue latérale partielle en coupe un troisième exemple de réalisation d'un deuxième mode de réalisation du dispositif de sécurité selon l'invention, dans lequel le couvercle est au contact du récipient de travail,
- La figure 4c montre selon une vue latérale partielle en coupe un troisième exemple de réalisation d'un deuxième mode de réalisation du dispositif de sécurité selon l'invention, dans lequel le couvercle est mis en place sur le récipient de travail,
- La figure 5a montre selon une vue latérale partielle en coupe un quatrième exemple de réalisation d'un deuxième mode de réalisation du dispositif de sécurité selon l'invention, dans lequel le couvercle est soulevé du récipient de travail,
- La figure 5b montre selon une vue de dessus un quatrième exemple de réalisation d'un deuxième mode de réalisation du dispositif de sécurité selon l'invention, dans lequel un capot du corps de l'appareil a été ôté,
- La figure 5c montre selon une vue partielle de face en coupe un détail d'un quatrième exemple de réalisation d'un deuxième mode de réalisation du dispositif de sécurité selon l'invention, dans lequel le couvercle est soulevé du récipient de travail,
- La figure 6a montre selon une vue de dessus en coupe partielle un premier exemple de réalisation d'un troisième mode de réalisation du dispositif de sécurité selon l'invention,
- La figure 6b montre selon une vue de dessus en coupe partielle un deuxième exemple de réalisation d'un troisième mode de réalisation du dispositif de sécurité selon l'invention,
- La figure 7a montre selon une vue de dessus en coupe partielle une variante avantageuse du troisième mode de réalisation du dispositif de sécurité selon l'invention, dans lequel le récipient de travail n'est pas présent dans l'appareil,
- La figure 7b montre selon une vue de dessus en coupe partielle une variante avantageuse du troisième mode de réalisation du dispositif de sécurité selon l'invention, dans lequel le couvercle est disposé sur le récipient de travail,
- La figure 8 montre selon une vue partielle de face en coupe une autre variante avantageuse de réalisation du dispositif de sécurité selon l'invention,
- La figure 9a montre selon une vue partielle de face en coupe une variante avantageuse de réalisation du dispositif de sécurité selon l'invention, lorsque le couvercle est ôté de l'appareil,
- La figure 9b montre selon une vue partielle de face en coupe la même variante avantageuse du dispositif de sécurité selon l'invention, après mise en place du couvercle,
- La figure 9c montre selon une vue partielle de face en coupe la même variante avantageuse du dispositif de sécurité selon l'invention, lors du retrait du couvercle,

Le dispositif de sécurité selon l'invention est prévu pour être utilisé sur un appareil électroménager de préparation culinaire, du genre robot ménager.

### MEILLEURE MANIERE DE REALISER L'INVENTION

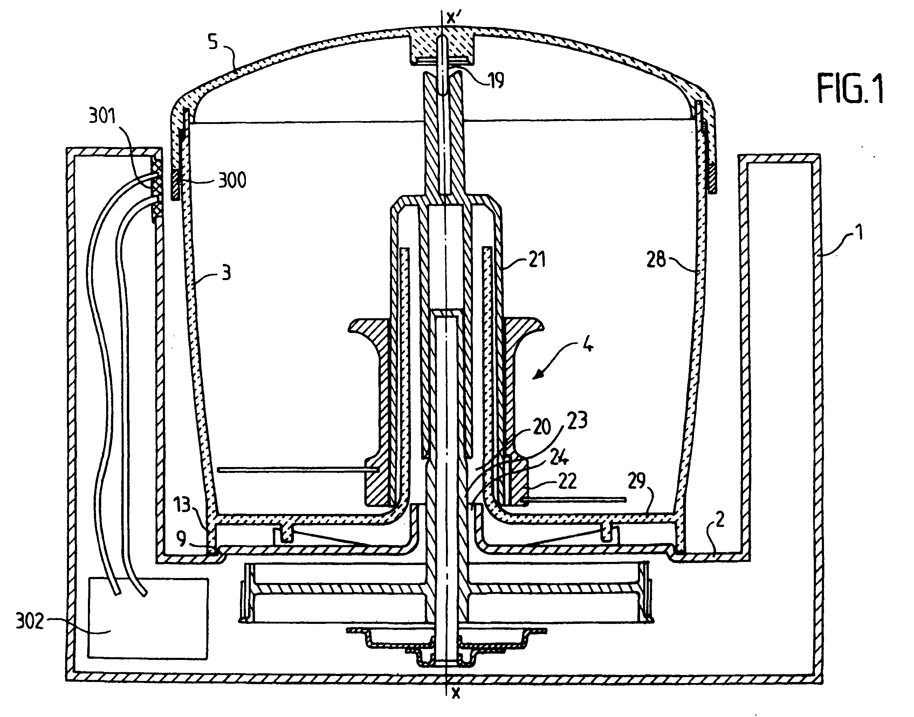

Tel que représenté aux figures 1 à 2c, un tel appareil comporte un corps 1 formant un socle 2 prévu pour recevoir un récipient de travail 3 d'axe de symétrie x-x' dans lequel est susceptible d'être disposé un organe de travail rotatif 4 entraîné par un moteur (non représenté auxdites figures) disposé dans le corps 1, un couvercle 5 prévu pour fermer le récipient de travail 3, et des moyens de verrouillage (non représentés auxdites figures) du couvercle 5 sur le récipient de travail 3 disposé sur le socle 2.

Le récipient de travail 3 comporte avantageusement une jupe périphérique inférieure 13 prévue pour coopérer avec un rebord 9 ménagé dans le socle 2. Le récipient de travail 3 comporte des parois latérales 28 et un fond 29 dans lequel est ménagée une cheminée centrale 20 prévue pour le passage des moyens d'entraînement de l'organe de travail 4. Avantageusement l'organe de travail 4 se compose d'un moyeu 21 sur lequel est monté de manière connue un outil de travail 22, tel que représenté aux figures 1 à 2c. Le moyeu 21 coopère avec une tige 19 montée dans le couvercle 5 pour stabiliser la rotation de l'organe de travail 4.

Le moteur (non représenté aux figures) disposé dans le corps 1 de l'appareil entraîne un axe de transmission 23, monté en regard d'un orifice 24 ménagé dans le socle 2, et sur lequel est monté l'organe de travail 4, tel que représenté à la figure 1.

Le dispositif de sécurité comprend des moyens de détection de la présence du couvercle 5 sur le récipient 3 disposé sur le socle 2.

Selon l'invention le dispositif de sécurité est susceptible d'être activé par la simple mise en place du couvercle 5 sur le récipient 3 disposé sur le socle 2.

Par le terme activé il convient d'entendre que le dispositif de sécurité autorise le fonctionnement du moteur de l'appareil entraînant l'organe de travail 4. Par l'expression simple mise en place du couvercle 5 mis en place sur le récipient 3 il convient d'entendre une mise en place du couvercle à l'aide d'un mouvement simple de l'utilisateur, à l'exception de tout mouvement impliquant au moins deux actions distinctes de l'utilisateur, par exemple poser le couvercle 5 sur le récipient 3, puis tourner le couvercle 5 par rapport au récipient 3.

Le couvercle 5 comporte une bague de détection prévue pour coopérer avec au moins un détecteur disposé dans le corps 1.

Avantageusement le dispositif comporte des moyens commandant le freinage du moteur lorsque le couvercle 5 est retiré du récipient 3 disposé sur le socle 2. Les moyens de freinage peuvent être commandés par exemple par la disparition de l'activation du dispositif.

Selon un exemple de réalisation d'un premier mode de réalisation, montré à la figure 1, le dispositif de sécurité comporte des moyens magnétiques 300, disposés sur la périphérie du couvercle 5, lesdits moyens étant susceptibles de coopérer avec un détecteur magnétique 301 disposé dans le corps 1 et relié à une électronique de détection 302, lorsque le couvercle 5 est mis en place sur le récipient 3 disposé sur le socle 2. Les moyens magnétiques 300 peuvent consister par exemple en une bande magnétique annulaire ou encore en une pluralité d'éléments magnétiques disposés sur le couvercle 5 de manière à ce qu'au moins un élément soit détecté par le détecteur 301 lorsque le couvercle 5 est mis en place sur le récipient 3 disposé sur le socle 2.

Dans ce premier mode de réalisation, la bague de détection est formée par les moyens magnétiques 300 disposés sur le couvercle 5 et le détecteur disposé dans le corps 1 est formé par le détecteur magnétique 301, lequel est relié à l'électronique de détection 302.

Le fonctionnement de l'exemple de réalisation de ce premier mode de réalisation est le suivant.

Le dispositif de sécurité est activé lorsque le couvercle 5 est correctement mis en place sur le récipient 3 disposé sur le socle 2. Le détecteur magnétique 301 détecte la présence des moyens magnétiques 300 et autorise le fonctionnement de l'appareil par l'intermédiaire du circuit électronique 302.

Selon un deuxième mode de réalisation, le dispositif de sécurité comporte un moyen de commande 320 monté dans le corps 1 et susceptible d'être actionné par le couvercle 5 mis en place sur le récipient 3 disposé sur le socle 2, ainsi qu'un moyen de protection 321 prévu pour s'interposer entre le corps 1 et le récipient 3 lors de l'actionnement du moyen de commande 320, de manière à prévenir l'actionnement du moyen de commande 320 par un moyen autre que le couvercle 5. Ainsi l'utilisateur manipulant le moyen de commande 320 du dispositif de sécurité à la main, ou à l'aide d'un outil tel qu'un manche de couvert, ne pourra pas mettre en marche l'appareil.

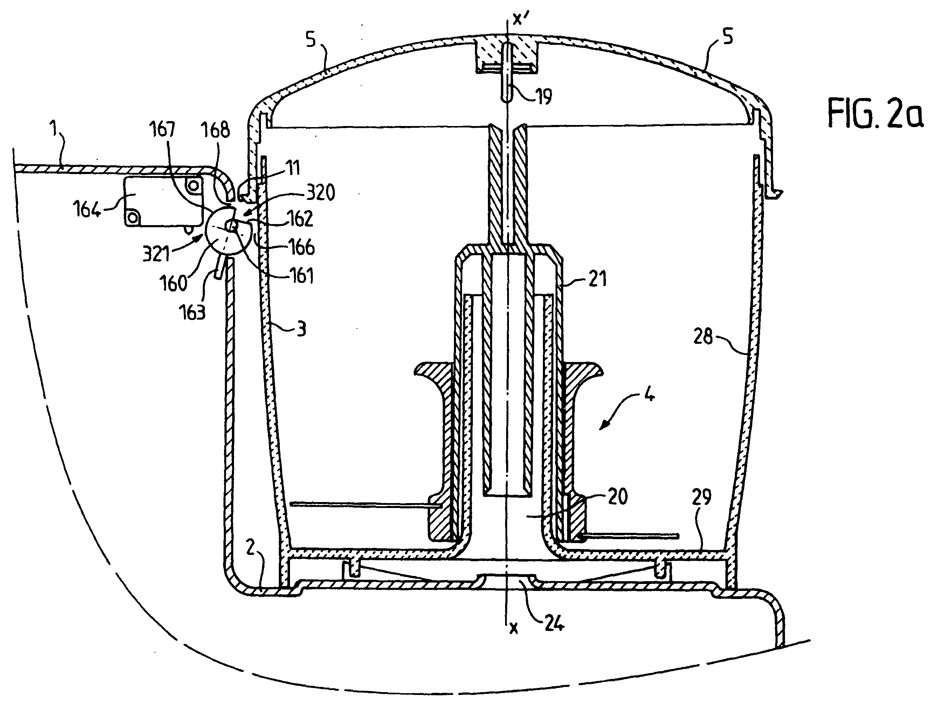

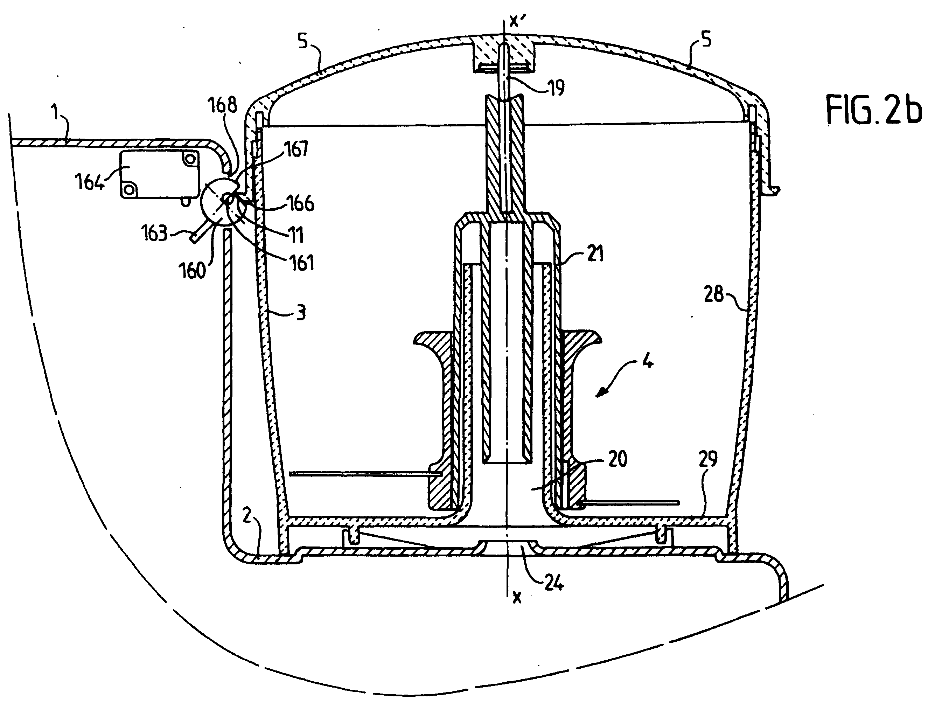

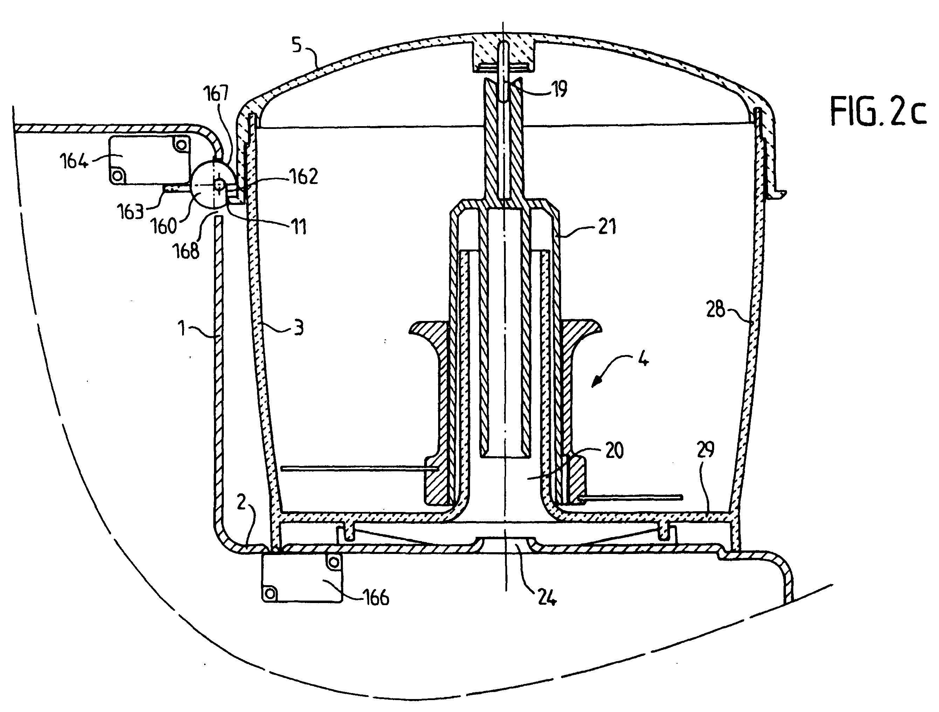

Selon un premier exemple de réalisation du deuxième mode de réalisation, montré aux figures 2a à 2c, le dispositif de sécurité comporte une tige 160 montée dans le corps 1 pivotante sur un axe 161 sensiblement perpendiculaire à l'axe de révolution x-x' du récipient 3, contre un moyen de rappel (non représenté aux figures) entre une position d'attente représentée à la figure 2a et une position active représentée à la figure 2c. La tige 160 comporte un méplat 162 prévu pour coopérer avec un rebord 11 du couvercle 5, avantageusement à travers une ouverture 168 ménagée dans le corps 1, ledit méplat formant le moyen de commande 320. La tige 160 comporte également une patte 163 prévue pour actionner un microrupteur 164 lorsque le couvercle 5 est mis en place sur le récipient 3 disposé sur le socle 2. Tel que montré aux figures 2a à 2c le rebord 11 se présente sous la forme d'une collerette. Le moyen de rappel est prévu pour ramener la tige 160 dans une position d'attente représentée à la figure 2a dans laquelle le rebord 11 du couvercle 3 est susceptible d'actionner le méplat 162. Cette disposition des moyens de sécurité présente l'avantage d'être indépendante des moyens de verrouillage du couvercle 5 sur le récipient de travail 3 disposé sur le socle 2. La tige 160 présente une surface convexe 167, avantageusement cylindrique, laquelle s'étend à l'extérieur du corps 1 lorsque la patte 163 actionne le microrupteur 164. Cette disposition rend difficile l'actionnement de la tige 160 par un moyen autre que le rebord 11 du couvercle 5. La surface 167 forme un moyen de protection 321 s'interposant entre le corps 1 et le récipient 3 lors de l'actionnement du méplat 162 formant le moyen de commande 320. Avantageusement encore un deuxième microrupteur 166 monté dans le corps 1 de l'appareil est prévu pour détecter la présence correcte du récipient 3 sur le socle 2.

Le fonctionnement de ce premier exemple de réalisation est le suivant. Le rebord 11 appuyant sur le méplat 162 entraîne la rotation de la tige 160 dont la patte 163 actionne le microrupteur 164. La surface convexe 167 de la tige 160 protège le méplat 162.

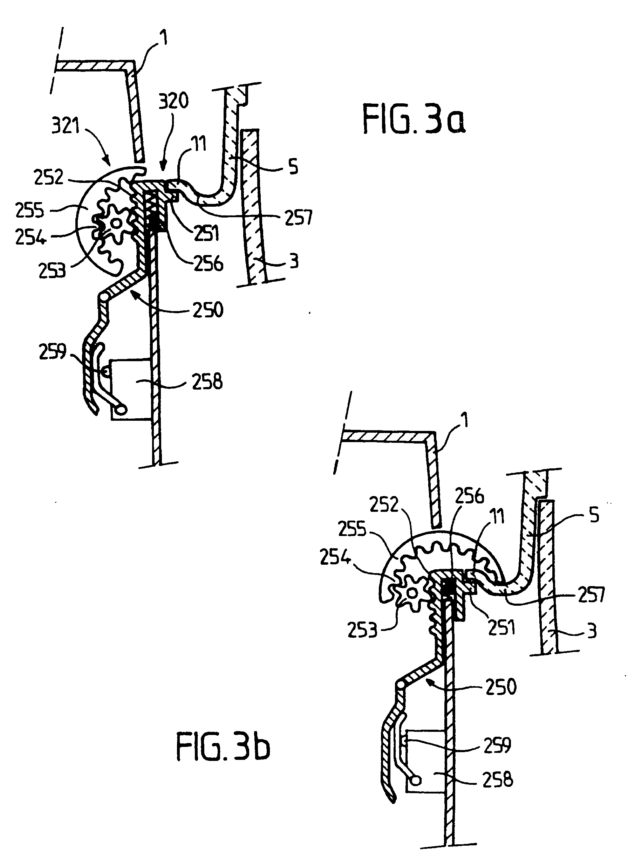

Selon un deuxième exemple de réalisation du deuxième mode de réalisation, montré aux figures 3a et 3b, le dispositif de sécurité comporte une glissière 250 montée coulissante, selon une direction sensiblement parallèle à la direction d'introduction du couvercle 5 sur le récipient 3, sur le corps 1 contre un moyen de rappel 256 entre une position d'attente représentée à la figure 3a et une position active représentée à la figure 3b.

La glissière 250 comporte une patte 251 susceptible de coopérer avec un rebord 11 du couvercle 5. Tel que montré aux figures 3a et 3b le rebord 11 se présente sous la forme d'une collerette. La glissière 250 comporte une crémaillère 252 coopérant par l'intermédiaire d'une roue dentée 253 avec une crémaillère 254 ménagée longitudinalement sur une cornière 255 avantageusement semi-circulaire. La glissière 250 forme le moyen de commande 320 et la cornière 255 forme le moyen de protection 321. La glissière 250 coopère dans la position active avec un bouton de commande 259 d'un microrupteur 258 activant le dispositif de sécurité. Dans la position active représentée à la figure 3b la cornière 255 est prévue pour protéger la patte 251 d'un actionnement, intentionnel ou non, autre que celui commandé par le rebord 11 du couvercle 5.

Avantageusement le rebord 11 comporte une remontée 257 rendant encore plus difficile l'actionnement intentionnel de la patte 251.

Le fonctionnement de ce deuxième exemple de réalisation est le suivant. Le rebord 11 appuyant sur la patte 251 déplace la glissière 250 laquelle actionne le microrupteur 258. La cornière 255 entraînée par la glissière 250 protège la glissière 250 et la patte 251.

Si l'utilisateur cherche à actionner la patte 251 avec un outil, la cornière 255 entraînée en rotation frappe latéralement l'outil et le chasse de la patte 251 avant que le microrupteur n'active le dispositif de sécurité autorisant la mise en route de l'appareil.

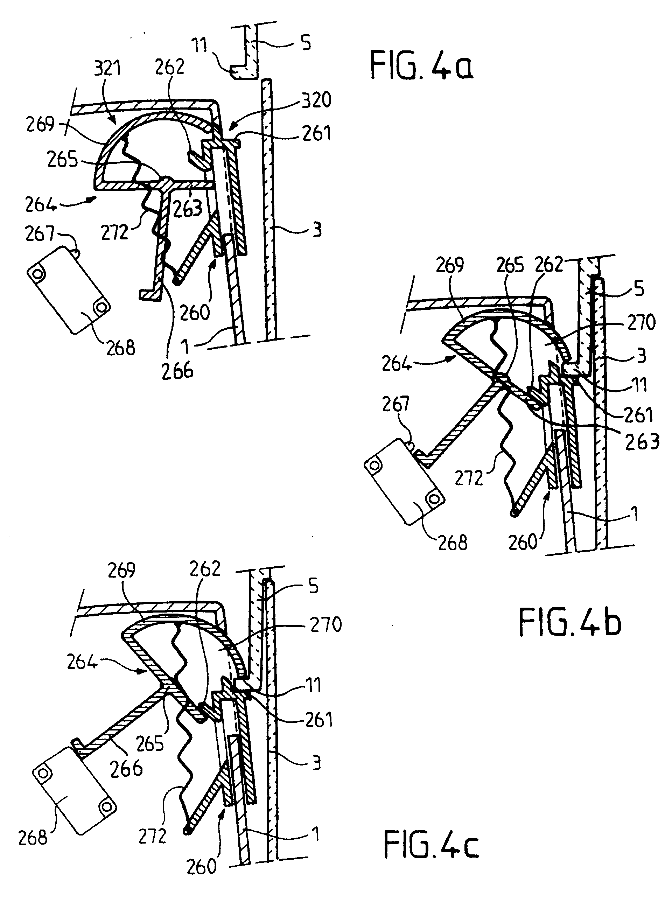

Selon un troisième exemple de réalisation du deuxième mode de réalisation, montré aux figures 4a à 4c, le dispositif de sécurité comporte une glissière 260 montée coulissante, selon une direction sensiblement parallèle à la direction d'introduction du couvercle 5 sur le récipient 3, sur le corps 1 entre une position d'attente représentée à la figure 4a et une position active représentée à la figure 4c.

La glissière 260 comporte un rebord 261 susceptible de coopérer avec un rebord 11 du couvercle 5. Tel que montré aux figures 4a à 4c le rebord 11 se présente sous la forme d'une collerette. La glissière 260 comporte une butée 262 susceptible de coopérer avec un premier bras 263 d'une pièce 264 montée pivotante sur un axe 265 sensiblement perpendiculaire à l'axe de révolution x-x' du récipient 3. La pièce 264 comprend un second bras 266 susceptible d'actionner un bouton de commande 267 d'un microrupteur 268, lorsque le rebord 11 du couvercle 5 mis en place sur le récipient 3 coopère avec le rebord 261 de la glissière 260. La pièce 264 comporte un volet 269 avantageusement incurvé et préférentiellement de géométrie cylindrique prévu pour sortir du corps 1 par une ouverture 270. La glissière 261 forme le moyen de commande 320 et le volet 269 forme le moyen de protection 321. La glissière 250 coopère dans la position active avec le bouton de commande 267 du microrupteur 268 activant le dispositif de sécurité. Dans la position active représentée à la figure 4c le volet 269 est prévu pour protéger la patte 251 d'un actionnement, intentionnel ou non, autre que celui commandé par le rebord 11 du couvercle 5. Avantageusement un moyen de rappel 272 est monté entre la glissière 260 et la pièce 264. Avantageusement encore le moyen de rappel 272 est monté de manière à ce que la position intermédiaire représentée à la figure 4b présente un point dur.

Le fonctionnement de ce troisième exemple de réalisation est le suivant. Le rebord 11 appuyant sur le rebord 261 déplace la glissière 260, laquelle actionne le microrupteur 268. Le volet 269 entraîné par la glissière 260 protège la glissière 260 et le rebord 261.

Si l'utilisateur cherche à actionner le rebord 261 avec un outil, le volet 269 entraîné en rotation frappe latéralement l'outil et le chasse du rebord 261 avant que le microrupteur n'active le dispositif de sécurité autorisant la mise en route de l'appareil.

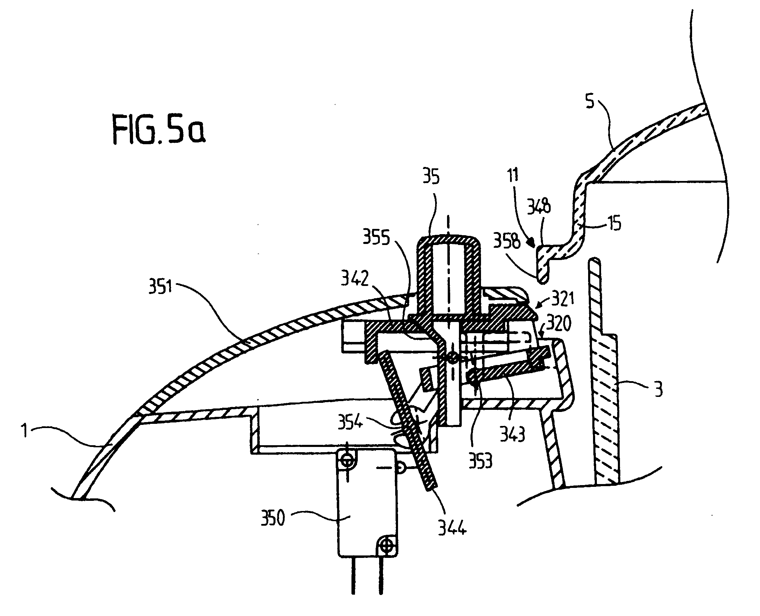

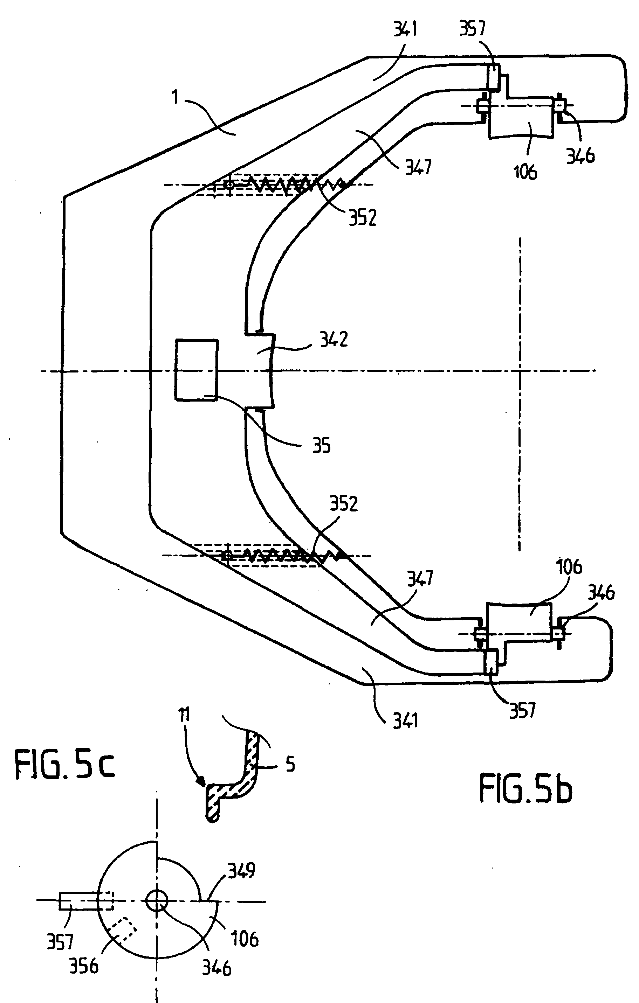

Selon un quatrième exemple de réalisation du deuxième mode de réalisation, montré aux figures 5a à 5c, le moyen de commande 320 du dispositif de sécurité comporte une bascule 343 commandant un microrupteur 350.

La figure 5a montre dans le corps 1 de l'appareil la bascule 343 montée pivotante sur un axe 353. Une extrémité de la bascule 343 est susceptible d'être actionnée par un rebord 11 du couvercle 5. Le couvercle 5 comporte une jupe 15 présentant un épaulement 348 et se termine par une extrémité 358 formant le rebord 11. L'extrémité opposée de la bascule 343 comporte un logement dans lequel pivote un axe 354 d'un organe de commande 344. Un bras d'actionnement 342 est monté mobile dans le corps 1 entre une position rentrée dans laquelle le couvercle 5 peut être mis en place sur le récipient de travail 3 et une position sortie dans laquelle une extrémité du bras d'actionnement 342 vient recouvrir partiellement l'épaulement 348 du couvercle 5. Une extrémité de l'organe de commande 344 est prévue pour actionner le bouton du microrupteur 350 alors que l'autre extrémité coopère avec le bras d'actionnement.

Le dispositif de sécurité est associé à des moyens de verrouillage du couvercle 5 sur le récipient 3, lesdits moyens de verrouillage étant mis en oeuvre par un déplacement du couvercle 5 dans le sens vertical. Un bouton de déverrouillage 35 des moyens de verrouillage est monté mobile dans le corps 1 entre une position enfoncée de déverrouillage dans laquelle le couvercle 5 peut être mis en place ou retiré et une position relevée dans laquelle le couvercle 5 est verrouillé sur le récipient de travail 3. Dans la figure 5a le bras d'actionnement 342 est en position rentrée et le bouton de déverrouillage 35 est représenté en position de déverrouillage. Le bouton 35 comporte une surface de came 355 susceptible d'être actionnée par le bras d'actionnement 342. Un capot 351 monté sur le corps 1 recouvre les éléments du dispositif de verrouillage.

La figure 5b montre que le corps 1 comporte deux bras 341 entre lesquels peut être disposé le récipient de travail (non montré à la figure). Sur chacun des bras 341 est monté une mâchoire 106 prévue pour verrouiller le couvercle sur le récipient de travail. Le bras d'actionnement 342 se prolonge dans chaque bras 341 par une tige 347 dont l'extrémité 357 est susceptible de coopérer avec la mâchoire 106. Des ressorts 352 sont prévus pour déplacer le bras d'actionnement 342 en position sortie en direction du récipient de travail.

La figure 5c montre une mâchoire 106 montée mobile en rotation sur un axe 346. La mâchoire 106 comporte une encoche 356 prévue pour recevoir l'extrémité 357 de la tige 347 du bras d'actionnement 342. La mâchoire 106 comporte également une découpe 349 prévue pour coopérer avec le rebord 11 du couvercle 5. La mâchoire 106 présente un balourd formant un moyen de rappel tendant à ramener ladite mâchoire dans la position déverrouillée. A titre de variante, non montrée aux figures, le moyen de rappel peut être un moyen de rappel élastique.

Le fonctionnement de ce quatrième exemple de réalisation est le suivant. Le rebord 11 du couvercle 5 mis en place sur le récipient 3 actionne à la fois la bascule 343 et les mâchoires 106. La bascule 343 pivote sur l'axe 353 et rapproche l'organe de commande 344 du microrupteur 350. Les mâchoires 106 pivotent sur les axes 346 et les extrémités 357 des tiges 347 du bras d'actionnement 342 entrent dans les encoches 356. Le bras d'actionnement 342 prend sa position sortie sous l'action des ressorts 352, position dans laquelle il vient recouvrir partiellement l'épaulement 348 du couvercle 5. Lors de ce déplacement le bras d'actionnement 342 entraîne la remontée du bouton de déverrouillage 35 en position verrouillée par l'intermédiaire de la came 355, et actionne l'organe de commande 344 qui vient commander le microrupteur 350.

Si l'utilisateur cherche à actionner la bascule 343 alors que les mâchoires 106 sont en position d'attente, le bras d'actionnement 342 bloqué par les mâchoires 106 empêche l'actionnement de l'organe de commande 344. Le dispositif de sécurité ne peut être activé pour faire fonctionner l'appareil. Si l'utilisateur actionne les mâchoires 106 pour les amener en position de verrouillage, le bras d'actionnement 342 repoussé par les ressorts 352 vient protéger la bascule 343 et l'utilisateur ne peut pas l'atteindre.

En résumé, dans le deuxième mode de réalisation présenté, la bague de détection est formée sur le couvercle 5 par le rebord 11, le détecteur disposé dans le corps 1 étant formé par le moyen de commande 320, lequel commande le microrupteur 164 ; 258 ; 268 ; 350.

De manière générale, le fonctionnement de ce second mode de réalisation est le suivant. Le dispositif de sécurité est activé lorsque le couvercle 5 est correctement mis en place sur le récipient 3 disposé sur le socle 2. Le rebord 11 du couvercle 5 actionne le moyen de commande 320. L'utilisateur voulant actionner le moyen de commande 320 voit son action entravée par le moyen de protection 321 s'interposant entre le corps 1 et le récipient 3, de manière à prévenir l'actionnement du moyen de commande 320 par un moyen autre que le couvercle 5.

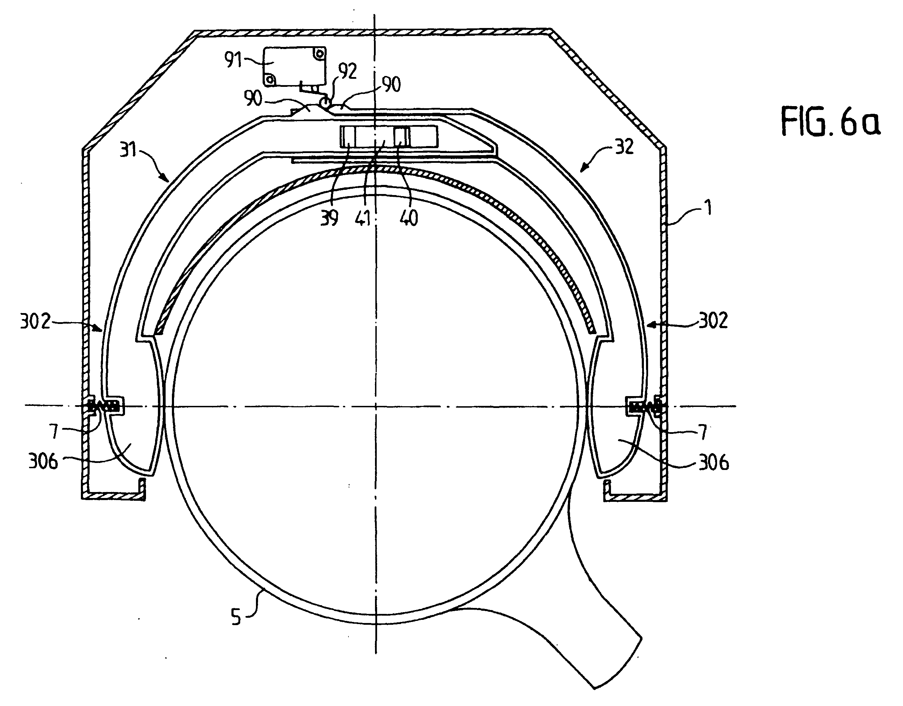

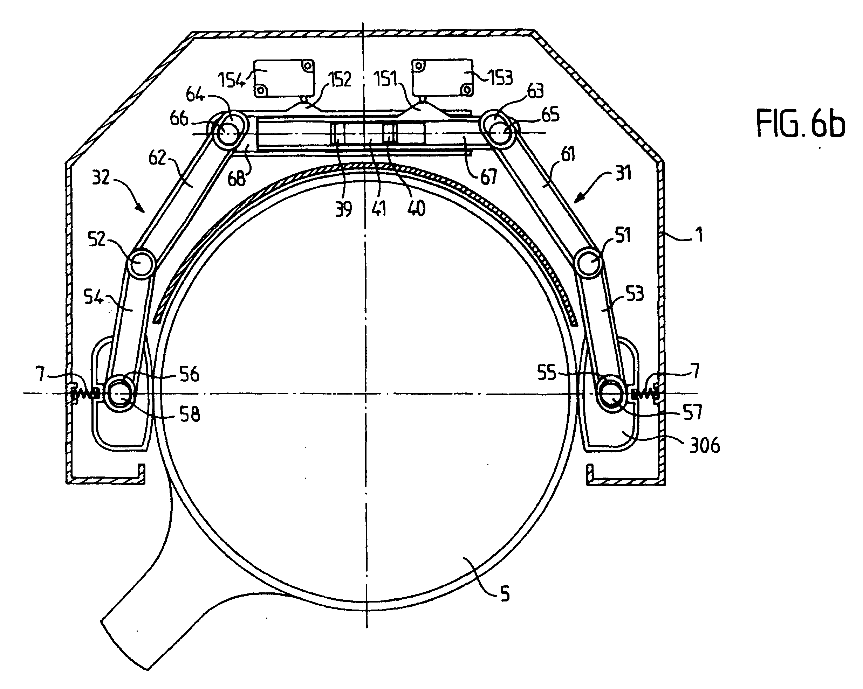

Selon un troisième mode de réalisation dont deux exemples de réalisations sont représentés respectivement aux figures 6a et 6b, le dispositif de sécurité comporte au moins deux capteurs de commande 302 disposés dans le corps 1, et susceptibles d'actionner au moins un microrupteur 91; 153, 154, lesdits capteurs comprenant chacun au moins une tête 306 susceptible d'occuper une position sortie dans laquelle le microrupteur n'autorise pas le fonctionnement de l'appareil, lesdites têtes étant susceptibles d'être déplacées par le couvercle 5 mis en place sur le récipient 3 disposé sur le socle 2 vers une position rentrée dans laquelle le microrupteur autorise le fonctionnement de l'appareil.

Selon l'exemple de réalisation présenté à la figure 6a, chacune des deux têtes 306 est prolongée par un bras 31, 32 comportant chacun un bossage 90 prévu pour libérer un bouton de commande 92 d'un microrupteur 91. Le microrupteur est prévu pour activer le dispositif lorsque le bouton est libéré par chacun des deux bossages 90. Le premier bras 31 coulisse axialement sur le second bras 32. Chacune des deux têtes 306 est avantageusement montée mobile contre un moyen de rappel 7.

Le fonctionnement de cet exemple de réalisation est le suivant. Le dispositif de sécurité est activé lorsque le couvercle 5 est correctement mis en place sur le récipient 3 disposé sur le socle 2. Les têtes 306 repoussées par le couvercle 5 actionnent par l'intermédiaire des bras 31, 32 le ou les microrupteurs 91; 153, 154. L'utilisateur a besoin de ses deux mains pour actionner les deux têtes 306. Ainsi l'actionnement par mégarde d'une des deux têtes par l'utilisateur n'est pas susceptible d'activer le dispositif de sécurité et de rendre possible la mise en marche de l'appareil. L'utilisateur doit repousser chacune des têtes 306 pour que chacun des bossages 90 libère le bouton de commande 92 du microrupteur 91.

Selon l'exemple de réalisation présenté à la figure 6b chaque bras 31, 32 est articulé. Chacun des bras 31, 32 est monté sur un pivot 51, 52 et comporte un premier membre 53, 54 comprenant une lumière 55, 56 coopérant avec un ergot 57, 58 monté sur chacune des têtes 306. Chaque bras 31, 32 comporte également un second membre 61, 62 comprenant une lumière 63, 64 coopérant avec un ergot 65, 66 monté sur une glissière 67, 68. Chaque glissière 67, 68 comporte un bossage 151, 152 prévu pour commander un microrupteur 153, 154 lorsque les têtes 306 sont en position rentrée. Chacune des deux têtes 306 est avantageusement montée mobile contre un moyen de rappel 7.

Le fonctionnement de cet exemple de réalisation est le suivant. L'utilisateur doit repousser chacune des têtes 306 pour que chacun des bossages 151 ; 152 actionne le microrupteur 153 ; 154.

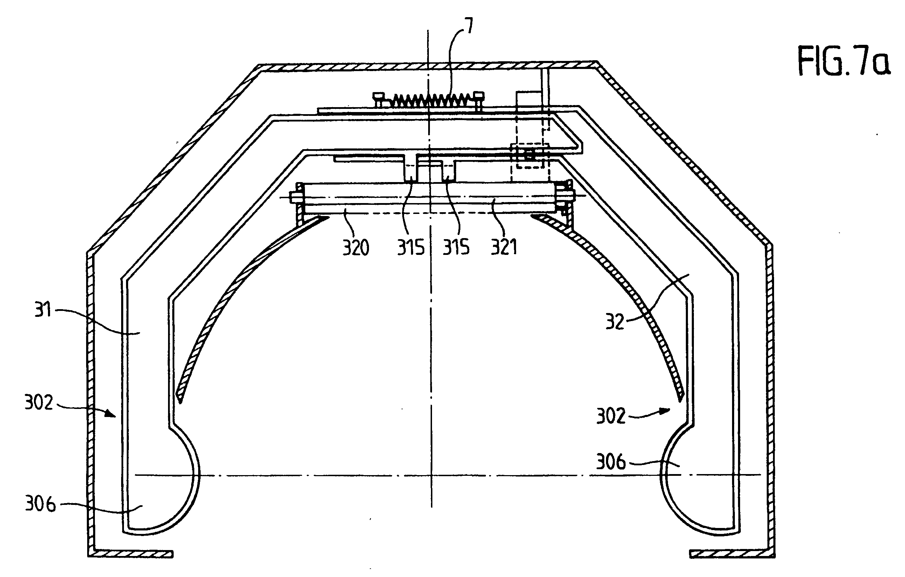

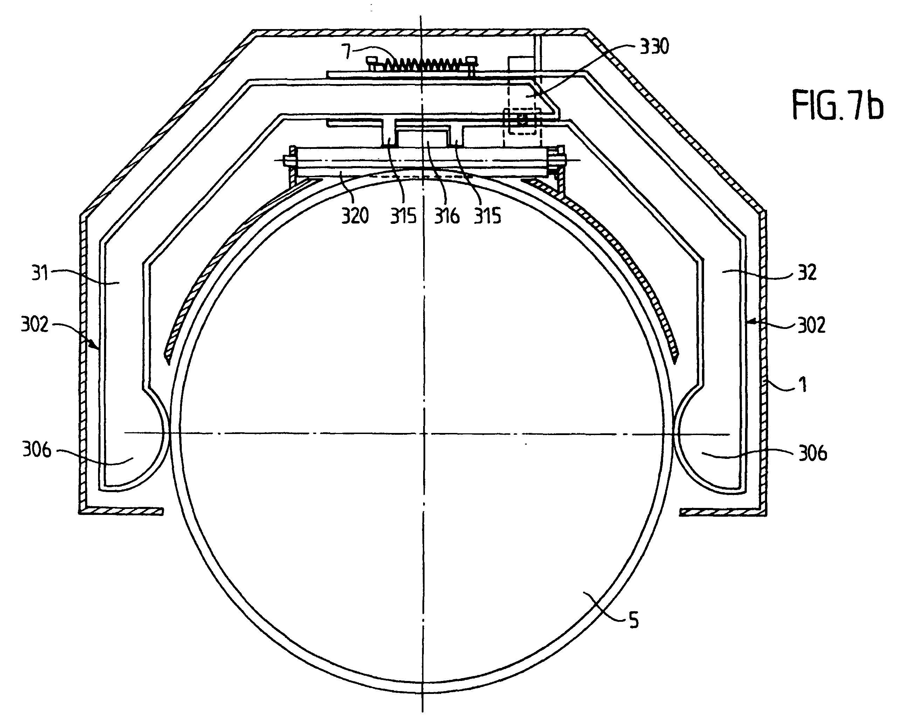

Selon une variante avantageuse de l'invention, le dispositif de sécurité comporte, associé aux deux capteurs de commande 302 comportant chacun une tête 306, un moyen de commande 320 prévu pour actionner un microrupteur 330. Tel que représenté aux figures 7a et 7b, chacune des deux têtes 306 est prolongée par l'un des bras 31, 32 formant l'un des capteurs 302, le premier bras 31 coulissant axialement sur le second bras 32, un moyen de rappel 7 est monté entre lesdits bras. Chaque bras 31, 32 porte un ergot 315 susceptible de coopérer avec une patte 316 issue du moyen de commande 320 lorsque les têtes 306 sont en position sortie de manière à empêcher le déplacement dudit moyen de commande. Le moyen de protection 321 n'est plus nécessaire.

Le fonctionnement de la variante représentée aux figures 7a et 7b est le suivant. Lorsque le couvercle 5 repousse les têtes 306 les ergots 315 dégagent la patte 316 et le moyen de commande 320 peut actionner le microrupteur 330. Sans couvercle l'utilisateur ne peut involontairement actionner à la fois les têtes 306 et le moyen de commande 320. La combinaison des têtes 306 avec le moyen de commande 320 renforce encore la sécurité.

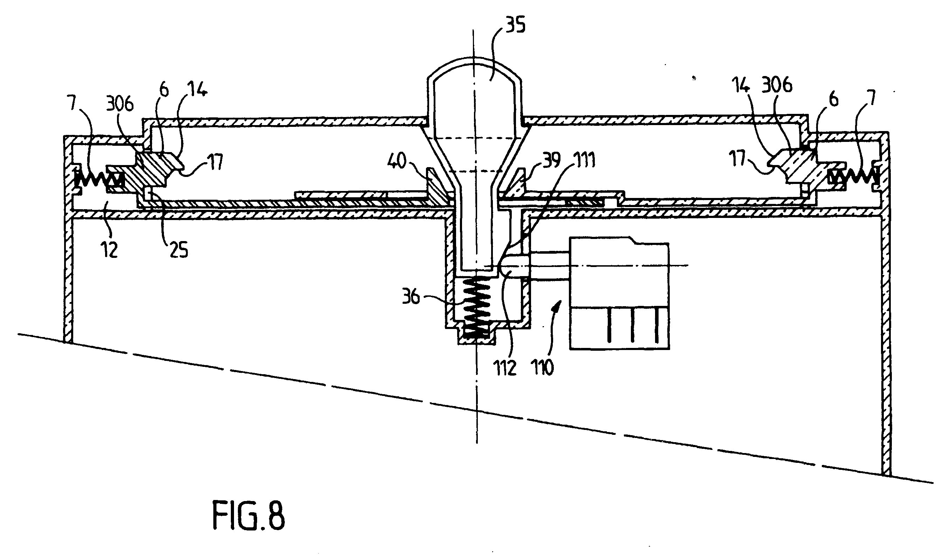

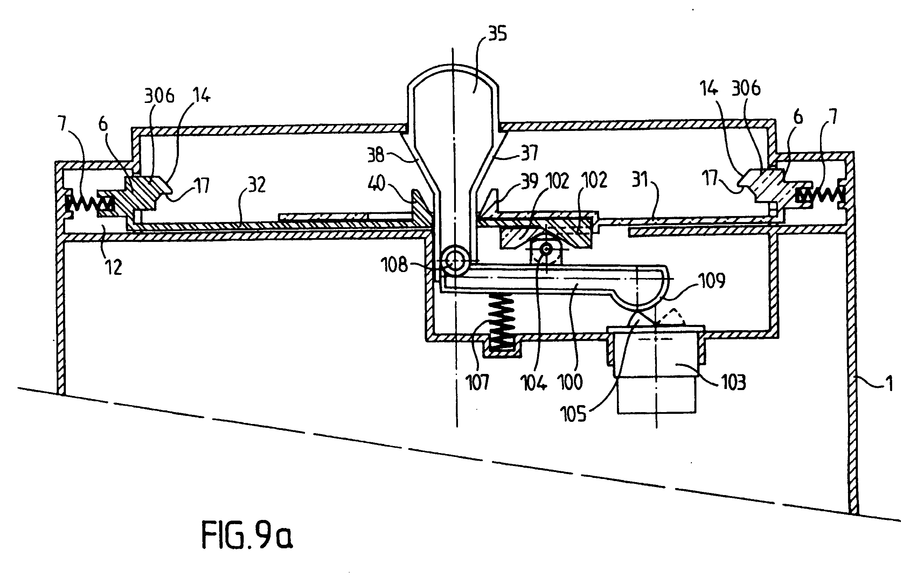

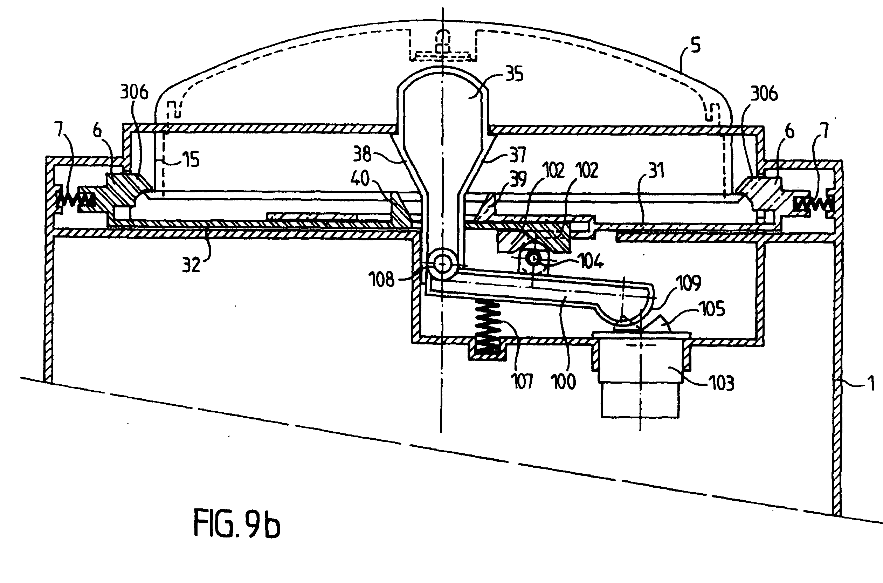

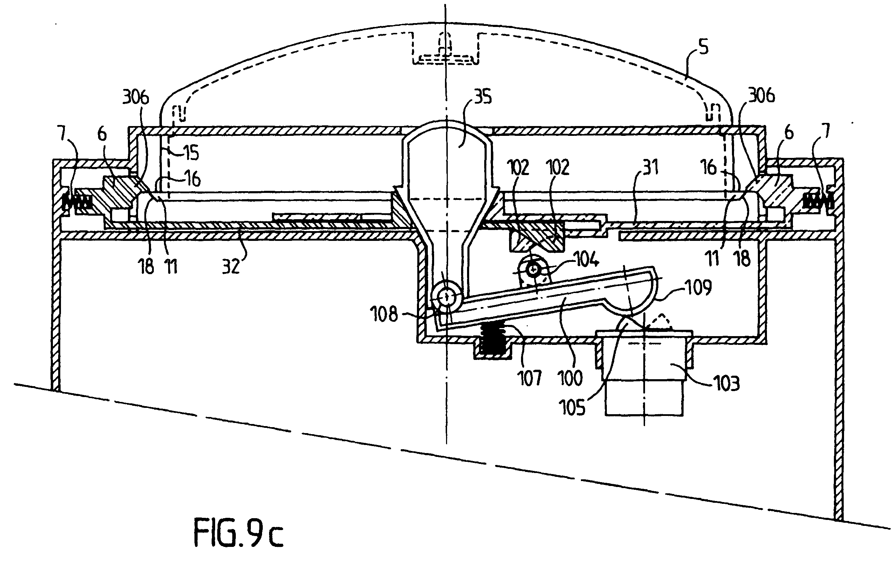

Selon deux autres variantes avantageuses de l'invention, représentées aux figures 8, 9a, 9b et 9c, les moyens de verrouillage comportent au moins deux mâchoires 6 montées mobiles à l'encontre d'au moins un moyen de rappel entre une position de verrouillage, correspondant à leur position de rappel, et une position de déverrouillage.

Les moyens de verrouillage sont susceptibles d'être amenés en position de déverrouillage grâce à des moyens de déverrouillage montés mobiles entre une position de repos dans laquelle les mâchoires 6 sont susceptibles de verrouiller le couvercle 5 sur le corps 1, et une position active, dans laquelle les mâchoires 6 occupent leur position de déverrouillage. Chacune des mâchoires 6 forme l'une des têtes 306. Avantageusement chaque mâchoire 6 est associée à un moyen de rappel 7.

Le couvercle 5 comporte une jupe périphérique 15 présentant au moins un rebord 11 prévu pour coopérer avec les mâchoires 6. Avantageusement le rebord 11 est périphérique. Cette disposition permet de présenter le couvercle 5 sur le récipient de travail 3 sans orientation angulaire préférentielle. Selon une variante de réalisation, non montrée aux figures, au moins l'un des rebords 11 est formé par la paroi inférieure d'une cavité, débouchante ou non, ménagée dans la paroi de la jupe 15.

Tel que montré à la figure 8, les mâchoires 6 sont montées mobiles radialement dans des logements 12 du corps 1 desquels elles sont susceptibles de déboucher par des ouvertures 25.

Chaque rebord 11 présente de manière avantageuse un méplat supérieur 16 prévu pour coopérer avec un méplat inférieur 17 ménagé sur chacune des mâchoires 6. Avantageusement chaque rebord 11 comporte un chanfrein inférieur 18 prévu pour repousser la mâchoire 6 contre le moyen de rappel 7 lors de la mise en place du couvercle 5 sur le récipient de travail 3. Avantageusement encore chaque mâchoire 6 comporte un chanfrein supérieur 14 prévu pour faciliter le glissement du rebord 11 sur ladite mâchoire lors de la mise en place du couvercle 5 sur le récipient de travail 3.

Un bouton de déverrouillage 35 monté dans le corps 1 contre un moyen de rappel 36 comporte deux surfaces de came 37, 38 susceptibles de repousser respectivement une première surface de came 39 ménagée sur le premier bras 31 et une deuxième surface de came 40 ménagée sur le second bras 32, le premier bras 31 comportant une ouverture 41 prévue pour le passage de la deuxième surface de came 40 ou de la surface de came 38, tel que représenté aux figures 5 et 6.

Tel que représenté à la figure 8, le bouton de déverrouillage 35 est mobile à l'encontre du moyen de rappel 36 entre une position de repos, dans laquelle les mâchoires 6 sont susceptibles de verrouiller le couvercle 5 sur le récipient 3, et une position active correspondant à la position de rappel, dans laquelle les mâchoires 6 occupent leur position de déverrouillage et le couvercle 5 peut être retiré du récipient 3. Le bouton de déverrouillage 35 coopère avec un frein 110. Le bouton de déverrouillage 35 comporte une surface de came 111 actionnant un organe de commande 112 du frein lorsque le bouton 35 est amené en position active.

Le fonctionnement de la variante représentée à la figure 8 est le suivant. Le retrait du couvercle 5 désactive le dispositif de sécurité. De manière avantageuse la commande du retrait du couvercle 5 associée à un système de verrouillage par mâchoires 6 commande le freinage de l'organe de travail. L'utilisateur appuyant sur le bouton de déverrouillage 35 actionne le bouton poussoir 112 du frein 110 permettant d'arrêter l'organe de travail. Avantageusement, les moyens de déverrouillage sont susceptibles de commander successivement le frein 110 prévu pour immobiliser l'organe de travail, puis les moyens de commande de l'ouverture des mâchoires 6.

Tel que représenté aux figures 9a à 9c, le bouton de déverrouillage 35 coopère avec une bascule 100 montée contre un moyen de rappel 107. La bascule comporte un appui 104 prévu pour coopérer avec des bossages 102 ménagés sur les bras 31, 32, et coopère avec un microrupteur 103. L'une des extrémités 108 de la bascule 100 est susceptible d'être actionnée par le bouton de déverrouillage 35 alors que l'autre extrémité 109 de la bascule 100 est susceptible d'actionner un bouton 105 du microrupteur 103. Le moyen de rappel 107 est monté entre l'extrémité 108 coopérant avec le bouton de déverrouillage et l'appui 104. Le microrupteur 103 peut commander un frein, un autre moyen étant prévu pour commander le dispositif. Le microrupteur peut aussi commander le dispositif de sécurité, et avantageusement un frein. Le bouton de déverrouillage 35 monté dans le corps 1 contre un moyen de rappel 36 comporte également deux surfaces de came 37, 38 susceptibles de repousser respectivement une première surface de came 39 ménagée sur le premier bras 31 et une deuxième surface de came 40 ménagée sur le second bras 32, formant les moyens de commande de l'ouverture des mâchoires 6.

Le fonctionnement de la variante de réalisation représentée aux figures 9a à 9c est le suivant. Lorsque l'utilisateur appuie sur le bouton 35, la bascule 100 pivote sur l'appui 104 et libère le bouton 105 du microrupteur commandant avantageusement un frein avant que les surfaces de came 37, 38 du bouton 35 ne coopèrent avec les surfaces de came 39, 40 des bras 31,32 pour libérer les mâchoires 6.

En résumé, dans le troisième mode de réalisation présenté, la bague de détection est formée par un bord périphérique du couvercle 5, le détecteur monté dans le corps étant formé par les têtes 306, lesquelles commandent le(s) microrupteur(s) 61 ; 153, 154 ; 103.

L'invention n'est nullement limitée strictement aux exemples de réalisation décrits précédemment, mais englobe de nombreuses modifications ou améliorations.

Notamment, à titre d'exemple complémentaire on peut envisager de remplacer la cheminée centrale 20 par une traversée étanche de paroi permettant la transmission du mouvement à l'outil, tel que connu sur les appareils électroménagers de type mélangeurs, prévus pour la réalisation de préparations liquides.

Un frein peut être également associé au premier ou au deuxième mode de réalisation.

L'invention peut être aussi appliquée à un dispositif de sécurité pour un appareil comportant un récipient et un couvercle dont la géométrie n'est pas de révolution, ou à un récipient et à un couvercle dont les parties en regard ne présentent pas d'axe de symétrie et nécessitent un indexage du couvercle sur le récipient selon une position donnée.

L'invention peut être aussi appliquée à un dispositif de sécurité pour un appareil comportant un récipient et un couvercle dont les parties en regard présentent un axe de symétrie, le corps du récipient et/ou du couvercle n'étant pas de révolution, mais permettant une liberté de positionnement en rotation du couvercle sur le récipient lors de l'introduction du couvercle sur le récipient.

La liberté de positionnement en rotation peut être totale (sur 360°) ou multiple (selon plusieurs positions).

A titre de variante, la bague de détection peut être remplacée par au moins une portion de bague de détection, permettant une certaine liberté de positionnement en rotation du couvercle sur le récipient lors de l'introduction du couvercle sur le récipient.

La liberté de positionnement en rotation est alors partielle (sur un ou plusieurs secteurs angulaires).

L'invention peut être également appliquée à un dispositif de sécurité pour un appareil comportant un récipient et un couvercle mis en place sur le récipient par un mouvement uniaxial selon un axe incliné, distinct de l'axe vertical.

La présente invention concerne également un appareil électroménager de préparation culinaire, du genre robot ménager, comportant un corps 1 formant un socle 2 prévu pour recevoir un récipient de travail 3 dans lequel est susceptible d'être disposé un organe de travail rotatif 4 entraîné par un moteur disposé dans le corps 1, un couvercle 5 prévu pour fermer le récipient de travail 3, et des moyens de verrouillage du couvercle 5 sur le récipient de travail 3 disposé sur le socle 2, comportant un tel dispositif de sécurité.

### POSSIBILITES D'APPLICATION INDUSTRIELLE

L'invention trouve son application dans le domaine technique général des appareils électroménagers de préparation culinaire, du genre robot ménagers multi-usages.

## Revendications

1. Dispositif de sécurité associé à un couvercle avec des éléments de détection pour appareil électroménager de préparation culinaire, du genre robot ménager comportant un corps (1) formant un socle (2) prévu pour recevoir un récipient de travail (3) dans lequel est susceptible d'être disposé un organe de travail rotatif (4) entraîné par un moteur disposé dans le corps (1), un couvercle (5) prévu pour fermer le récipient de travail (3), les parties en regard du couvercle (5) et du récipient de travail (3) présentant un axe de symétrie, le couvercle (5) pouvant être mis en place sur le récipient de travail (3) selon un mouvement axial, ledit dispositif de sécurité comprenant dans le couvercle (5) un élément de détection prévu pour coopérer avec des moyens de détection (301, 320, 306) de la présence du couvercle (5) sur le récipient (3) disposé sur le socle (2), lesdits moyens de détection (301, 320, 306) étant disposés dans le corps (1), **caractérisé en ce que** les moyens de détection (301, 320, 306) comprennent au moins un détecteur prévu pour coopérer avec au moins une portion de bague de détection appartenant au couvercle (5).

2. Dispositif de sécurité selon la revendication 1, **caractérisé en ce que** les moyens de détection (301, 320, 306) comprennent au moins un détecteur prévu pour coopérer avec une bague de détection appartenant au couvercle (5).

3. Dispositif de sécurité selon l'une des revendications 1 ou 2, **caractérisé en ce que** les moyens de détection comprennent un détecteur magnétique (301) prévu pour coopérer avec des moyens magnétiques (300) disposés sur la périphérie du couvercle (5), lorsque le couvercle (5) est mis en place sur le récipient (3) disposé sur le socle (2), le détecteur magnétique (301) étant relié à une électronique de détection (302).

4. Dispositif de sécurité selon l'une des revendications 1 ou 2, **caractérisé en ce que** les moyens de détection comprennent un moyen de commande (320) susceptible d'être actionné par un rebord (11) du couvercle (5) mis en place sur le récipient (3) disposé sur le socle (2),

5. Dispositif de sécurité selon la revendication 4, **caractérisé en ce qu'**il comporte une bascule (343) commandant un microrupteur (350), montée dans le corps (1), une extrémité de la bascule (343) étant susceptible d'être actionnée par le rebord (11) du couvercle (5).

6. Dispositif de sécurité selon l'une des revendications 4 ou 5, **caractérisé en ce qu'**il comporte un moyen de protection (321) prévu pour s'interposer entre le corps (1) et le récipient (3) lors de l'actionnement du moyen de commande (320).

7. Dispositif de sécurité selon la revendication 6, **caractérisé en ce qu'**il comporte un bras d'actionnement (342) monté mobile dans le corps (1) contre des ressorts (352) entre une position rentrée et une position sortie correspondant à la position de rappel, dans laquelle une extrémité du bras d'actionnement (342) vient recouvrir partiellement un épaulement (348) du couvercle (5).

8. Dispositif de sécurité selon l'une des revendications 1 ou 2, **caractérisé en ce que** les moyens de détection comportent au moins deux capteurs de commande (302) susceptibles d'actionner au moins un microrupteur (91 ; 103 ; 153, 154 ; 330), lesdits capteurs comprenant chacun au moins une tête (306) susceptible d'occuper une position sortie dans laquelle le microrupteur n'autorise pas le fonctionnement de l'appareil, lesdites têtes étant susceptibles d'être déplacées par le couvercle (5) mis en place sur le récipient (3) disposé sur le socle (2) vers une position rentrée dans laquelle le microrupteur autorise le fonctionnement de l'appareil.

9. Dispositif de sécurité selon la revendication 8, **caractérisé en ce que** chaque capteur de commande (302) comprend un bras (31, 32) sur chacun desquels est monté au moins l'une des têtes (306).

10. Dispositif de sécurité selon l'une des revendications 8 ou 9, **caractérisé en ce qu'**il comporte un moyen de commande (320), susceptible d'actionner le microrupteur (330), et portant une patte (316) susceptible de coopérer avec des ergots (315) portés par les capteurs (302) lorsque les têtes (306) sont en position sortie.

11. Dispositif de sécurité selon l'une des revendications 8 à 10, **caractérisé en ce que** les têtes (306) forment des mâchoires (6) de verrouillage du couvercle (5) sur le récipient (3).

12. Dispositif de sécurité selon la revendication 11, **caractérisé en ce que** chaque tête (306) comporte un méplat inférieur (17) prévu pour coopérer avec un rebord périphérique (11) ménagé sur le couvercle (5).

13. Appareil électroménager de préparation culinaire, du genre robot ménager, comportant un corps (1) formant un socle (2) prévu pour recevoir un récipient de travail (3) dans lequel est susceptible d'être disposé un organe de travail rotatif (4) entraîné par un moteur disposé dans le corps (1), un couvercle (5) prévu pour fermer le récipient de travail (3), et des moyens de verrouillage (6, 106) du couvercle (5) fermant le récipient de travail (3) disposé sur le socle (2), les parties en regard du couvercle (5) et du récipient de travail (3) présentant un axe de symétrie, le couvercle (5) pouvant être mis en place sur le récipient de travail (3) selon un mouvement axial, **caractérisé en ce qu'**il comporte un dispositif de sécurité selon l'une des revendications 1 à 10 et **en ce que** les moyens de verrouillage comportent au moins deux mâchoires (6; 106) montées mobiles à l'encontre d'au moins un moyen de rappel entre une position de verrouillage, correspondant à leur position de rappel, et une position de déverrouillage, et que les moyens de verrouillage sont susceptibles d'être amenés en position de déverrouillage grâce à des moyens de déverrouillage (35) montés mobiles entre une position de repos dans laquelle les mâchoires (6, 106) sont susceptibles de verrouiller le couvercle (5) sur le corps (1), et une position active, dans laquelle les mâchoires (6, 106) occupent leur position de déverrouillage.

14. Appareil électroménager de préparation culinaire selon la revendication 13, **caractérisé en ce que** les moyens de déverrouillage (35) sont susceptibles de commander successivement un frein prévu pour immobiliser l'organe de travail, puis des moyens de commande de l'ouverture des mâchoires (6).

15. Appareil électroménager de préparation culinaire selon l'une des revendications 13 ou 14, **caractérisé en ce qu'**il comporte un dispositif de sécurité selon la revendication 7, les moyens de déverrouillage (35) comportant une surface de came (355) coopérant avec le bras d'actionnement (342), les mâchoires (106) étant montées mobiles en rotation sur le corps (1) contre des moyens de rappel, chaque mâchoire (106) comportant une encoche (356) prévue pour recevoir une extrémité (357) d'une tige (347) prolongeant le bras d'actionnement (342).

## Patentansprüche

1. Sicherheitsvorrichtung, die einem Deckel mit Erfassungselementen zugeordnet ist, für eine Elektro-Küchenmaschine zum Zubereiten von Nahrungsmitteln, von der Art eines Haushaltsroboters, mit einem Körper (1), der einen Sockel (2) zum Aufnehmen eines Arbeitsbehälters (3) bildet, in welchem ein drehbares Arbeitsorgan (4) angeordnet werden kann, das von einem im Körper (1) angeordneten Motor angetrieben wird, mit einem Deckel (5) zum Verschließen des Arbeitsbehälters (3), wobei die einander gegenüberliegenden Teile des Deckels (5) und des Arbeitsbehälters (3) eine Symmetrieachse aufweisen, wobei der Deckel (5) mit einer axialen Bewegung auf den Arbeitsbehälter (3) aufgesetzt werden kann, wobei die genannte Sicherheitsvorrichtung im Deckel (5) ein Erfassungselement enthält, das dazu vorgesehen ist, mit Mitteln (301, 320, 306) zum Erfassen eines vorhandenen Deckels (5) am auf dem Sockel (2) angeordneten Behälter (3) zusammenzuwirken, wobei die genannten Erfassungsmittel (301, 320, 306) im Körper (1) angeordnet sind, **dadurch gekennzeichnet, dass** die Erfassungsmittel (301, 320, 306) zumindest einen Sensor enthalten, der dazu vorgesehen ist, mit zumindest einem dem Deckel (5) zugehörigen Erfassungsringbereich zusammenzuwirken.

2. Sicherheitsvorrichtung nach Anspruch 1, **dadurch gekennzeichnet, dass** die Erfassungsmittel (301, 320, 306) zumindest einen Sensor enthalten, der dazu vorgesehen ist, mit einem dem Deckel (5) zugehörigen Erfassungsring zusammenzuwirken.

3. Sicherheitsvorrichtung nach einem der Ansprüche 1 oder 2, **dadurch gekennzeichnet, dass** die Erfassungsmittel einen Magnetsensor (301) enthalten, der dazu vorgesehen ist, mit am Umfang des Deckels (5) angeordneten Magnetmitteln (300) zusammenzuwirken, wenn der Deckel (5) auf den am Sockel (2) angeordneten Behälter (3) aufgesetzt ist, wobei der Magnetsensor (301) mit einer Erfassungselektronik (302) verbunden ist.

4. Sicherheitsvorrichtung nach einem der Ansprüche 1 oder 2, **dadurch gekennzeichnet, dass** die Erfassungsmittel ein Steuermittel (320) enthalten, das über einen Rand (11) des auf den am Sockel (2) angeordneten Behälter (3) aufgesetzten Deckels (5) betätigt werden kann.

5. Sicherheitsvorrichtung nach Anspruch 4, **dadurch gekennzeichnet, dass** sie eine Kippschaltung (343) enthält, die einen Mikroschalter (350) steuert und im Körper (1) montiert ist, wobei ein Ende der Kippschaltung (343) über den Rand (11) des Deckels (5) betätigbar ist.

6. Sicherheitsvorrichtung nach einem der Ansprüche 4 oder 5, **dadurch gekennzeichnet, dass** sie ein Schutzmittel (321) enthält, das dazu vorgesehen ist, bei der Betätigung des Steuermittels (320) sich zwischen den Körper (1) und den Behälter (3) einzufügen.

7. Sicherheitsvorrichtung nach Anspruch 6, **dadurch gekennzeichnet, dass** sie einen Betätigungsarm (342) enthält, der im Körper (1) entgegen Federn (352) zwischen einer Eintrittsstellung und einer der Rückholstellung entsprechenden Austrittsstellung beweglich gelagert ist, in der ein Ende des Betätigungsarms (342) eine Schulter (348) des Deckels (5) teilweise überdeckt.

8. Sicherheitsvorrichtung nach einem der Ansprüche 1 oder 2, **dadurch gekennzeichnet, dass** die Erfassungsmittel zumindest zwei Steuersensoren (302) enthalten, die zumindest einen Mikroschalter (91; 103; 153, 154; 330) betätigen können, wobei die genannten Sensoren jeweils zumindest einen Kopf (306) enthalten, der eine Austrittsstellung einnehmen kann, in welcher der Mikroschalter keinen Betrieb des Geräts gestattet, wobei die genannten Köpfe von dem Deckel (5), der auf den am Sockel (2) angeordneten Behälter (3) aufgesetzt ist, in eine Eintrittsstellung verlagerbar sind, in welcher der Mikroschalter den Betrieb des Geräts gestattet.

9. Sicherheitsvorrichtung nach Anspruch 8, **dadurch gekennzeichnet, dass** jeder Steuersensor (302) einen Arm (31, 32) enthält, an welchen jeweils zumindest einer der Köpfe (306) montiert ist.

10. Sicherheitsvorrichtung nach einem der Ansprüche 8 oder 9, **dadurch gekennzeichnet, dass** sie ein Steuermittel (320) enthält, das den Mikroschalter (330) betätigen kann und eine Lasche (316) trägt, die mit von den Sensoren (302) getragenen Vorsprüngen (315) zusammenwirken kann, wenn die Köpfe (306) sich in Austrittsstellung befinden.

11. Sicherheitsvorrichtung nach einem der Ansprüche 8 bis 10, **dadurch gekennzeichnet, dass** die Köpfe (306) Backen (6) zum Verriegeln des Deckels (5) am Behälter (3) bilden.

12. Sicherheitsvorrichtung nach Anspruch 11, **dadurch gekennzeichnet, dass** jeder Kopf (306) eine untere Abflachung (17) enthält, die dazu vorgesehen ist, mit einem am Deckel (5) ausgeführten Umfangsrand (11) zusammenzuwirken.

13. Elektro-Küchenmaschine zum Zubereiten von Nahrungsmitteln, von der Art eines Haushaltsroboters, mit einem Körper (1), der einen Sockel (2) zum Aufnehmen eines Arbeitsbehälters (3) bildet, in welchem ein drehbares Arbeitsorgan (4) angeordnet werden kann, das von einem im Körper (1) angeordneten Motor angetrieben wird, mit einem Deckel (5) zum Verschließen des Arbeitsbehälters (3) und Mitteln (6, 106) zum Verriegeln des Deckels (5), der den am Sockel (2) angeordneten Arbeitsbehälter (3) verschließt, wobei die einander gegenüberliegenden Teile des Deckels (5) und des Arbeitsbehälters (3) eine Symmetrieachse aufweisen, wobei der Deckel (5) mit einer axialen Bewegung auf den Arbeitsbehälter (3) aufgesetzt werden kann, **dadurch gekennzeichnet, dass** sie eine Sicherheitsvorrichtung nach einem der Ansprüche 1 bis 10 enthält und dass die Verriegelungsmittel zumindest zwei Backen (6; 106) enthalten, die entgegen zumindest eines Rückholmittels zwischen einer deren Rückholstellung entsprechenden Verriegelungsstellung und einer Entriegelungsstellung beweglich gelagert sind, und dass die Verriegelungsmittel über Entriegelungsmittel (35) in die Entriegelungsstellung gebracht werden können, die zwischen einer Ruhestellung, in welcher die Backen (6, 106) den Deckel (5) am Körper (1) verriegeln können, und einer aktiven Stellung beweglich gelagert sind, in welcher die Backen (6, 106) ihre Entriegelungsstellung einnehmen.

14. Elektro-Küchenmaschine zum Zubereiten von Nahrungsmitteln nach Anspruch 13, **dadurch gekennzeichnet, dass** die Verriegelungsmittel (35) nacheinander eine zum Festlegen des Arbeitsorgans vorgesehene Bremse und dann Mittel zum Steuern der Öffnung der Backen (6) steuern können.

15. Elektro-Küchenmaschine zum Zubereiten von Nahrungsmitteln nach einem der Ansprüche 13 oder 14, **dadurch gekennzeichnet, dass** sie eine Sicherheitsvorrichtung nach Anspruch 7 enthält, wobei die Verriegelungsmittel (35) eine Kurvenfläche (355) enthalten, die mit dem Betätigungsarm (342) zusammenwirkt, wobei die Backen (106) entgegen Federmitteln drehbar am Körper (1) gelagert sind, wobei jede Backe (106) eine Aussparung (356) enthält, die dazu vorgesehen ist, ein Ende (357) eines Stifts (347) aufzunehmen, der den Betätigungsarm (342) fortsetzt.

## Claims

1. A safety device associated with a lid having detector elements for a domestic electrical food-preparing appliance of the food processor type comprising a body (1) forming a base (2) designed to receive a working receptacle (3) in which there may be placed a rotary working member (4) driven by a motor disposed in the body (1), a lid (5) designed to close the working receptacle (3), the facing portions of the lid (5) and of the working receptacle (3) presenting an axis of symmetry, the lid (5) being suitable for being put into place on the working receptacle (3) by being moved axially, said safety device comprising a detector element in the lid (5) designed to co-operate with detector means (301, 320, 306) for detecting the presence of the lid (5) on the receptacle (3) disposed on the base (2), said detector means (301, 320, 306) being disposed in the body (1), the safety device being **characterized in that** the detector means (301, 320, 306) comprise at least one detector designed to co-operate with at least a portion of a detector ring belonging to the lid (5).

2. A safety device according to claim 1, **characterized in that** the detector means (301, 320, 306) comprise at least one detector designed to co-operate with a detector ring belonging to the lid (5).

3. A safety device according to claim 1 or claim 2, **characterized in that** the detector means comprise a magnetic detector (301) designed to co-operate with magnetic means (300) disposed on the periphery of the lid (5), when the lid (5) is put into place on the receptacle (3) placed on the base (2), the magnetic detector (301) being connected to an electronic detector circuit (302).

4. A safety device according to claim 1 or claim 2, **characterized in that** the detector means comprise controller means (320) suitable for being activated by a rim (11) of the lid (5) bought into place on the receptacle (3) placed on the base (2).

5. A safety device according to claim 4, **characterized in that** it comprises a rocker (343) controlling a microswitch (350), the rocker (343) being mounted in the body (1) with one end thereof being suitable for being activated by the rim (11) of the lid (5).

6. A safety device according to claim 4 or claim 5, **characterized in that** it includes protector means (321) designed to be interposed between the body (1) and the receptacle (3) during actuation of the control means (320).

7. A safety device according to claim 6, **characterized in that** it includes an actuator arm (342) mounted to move in the body (1) against springs (352) between a retracted position and an extended position corresponding to the return position, in which one end of the actuator arm (342) partially overlaps a shoulder (348) of the lid (5).

8. A safety device according to claim 1 or claim 2, **characterized in that** the detector means comprise at least two control sensors (302) suitable for actuating at least one microswitch (91; 103; 153, 154; 330), each of said sensors having at least one head (306) suitable for occupying an extended position in which the microswitch does not allow the appliance to operate, said heads being suitable for being moved towards a retracted position by the lid (5) being put into place on the receptacle (3) placed on the base (2), in which retracted position the microswitch allows the appliance to operate.

9. A safety device according to claim 8, **characterized in that** each control sensor (302) comprises an arm (31, 32), each having at least one of the heads (306) mounted thereon.

10. A safety device according to claim 8 or claim 9, **characterized in that** it includes control means (320) suitable for actuating the microswitch (330), and carrying a tab (316) suitable for co-operating with lugs (315) carried by the sensors (302) when the heads (306) are in the extended position.

11. A safety device according to anyone of claims 8 to 10, **characterized in that** the heads (306) form jaws (6) for locking the lid (5) on the receptacle (3).

12. A safety device according to claim 11, **characterized in that** each head (306) as a bottom flat (17) designed to co-operate with a peripheral rim (11) formed on the lid (5).

13. A domestic electrical food-preparing appliance of the food processor type comprising a body (1) forming a base (2) for receiving a working receptacle (3) in which there may be placed a rotary working member (4) driven by a motor disposed in the body (1), a lid (5) provided to close the working receptacle (3), and locking means (6, 106) for locking the lid (5) closing the working receptacle (3) when placed on the base (2), the facing portions of the lid (5) and of the working receptacle (3) presenting an axis of symmetry, the lid (5) being suitable for being put into place on the working receptacle (3) by being moved axially, the appliance being **characterized in that** it includes a safety device according to any one of claims 1 to 10, and **in that** the locking means comprise at least two jaws (6; 106) mounted to move against at least one return means between a locking position, corresponding to their retracted position, and an unlocking position, and **in that** the locking means are suitable for being brought into the unlocking position by unlocking means (35) mounted to move between a rest position in which the jaws (6, 106) are capable of locking the lid (5) on the body (1), and an active position in which the jaws (6, 106) occupy their unlocking position.

14. A domestic electrical food-preparing appliance according to claim 13, **characterized in that** the unlocking means (35) are suitable for operating in succession a brake provided for preventing the working member from moving, and then control means for opening the jaws (6).

15. A domestic electrical food-preparing appliance according to claim 13 or claim 14, **characterized in that** it includes a safety device according to claim 7, the unlocking means (35) including a camming surface (355) co-operating with the actuator arm (342), the jaws (106) being mounted to move in rotation on the body (1) against return means, each jaw (106) having a notch (356) designed to receive one end (357) of a rod (347) extending the actuator arm (342).
